# EUROPEAN PATENT SPECIFICATION

(11) **EP 3 539 900 B1**
(45) Date of publication and mention of the grant of the patent: **30.11.2022**
(21) Application number: 18162279.6
(22) Date of filing: 16.03.2018
(51) Int. Cl.: B65D 85/804

(54) **CAPSULE FOR PREPARING INFUSION BEVERAGES AND CORRESPONDING CAPSULE PRODUCTION METHOD**
KAPSEL ZUR ZUBEREITUNG VON AUFGUSSGETRÄNKEN UND ZUGEHÖRIGES KAPSELHERSTELLUNGSVERFAHREN
CAPSULE POUR PRÉPARER DES BOISSONS D'INFUSION ET PROCÉDÉ DE PRODUCTION DE CAPSULES CORRESPONDANT

(43) Date of publication of application: 18.09.2019
(73) Proprietor: PRODUCTOS SOLUBLES S.A., 34200 Venta de Baños, Palencia (ES)
(72) Inventor: CALSINA GOMIS, Joaquin, 08072 Sant Cugat (Barcelona) (ES)
(74) Representative: Curell Suñol S.L.P.

(56) References cited:
- WO-A1-2008/078989
- WO-A1-2011/124990
- WO-A1-2014/102701
- WO-A1-2015/124534
- WO-A1-2016/125195

## Description

### Field of the invention

The invention relates to a capsule for preparing infusion beverages by circulating an infusion fluid through an infusion product, said capsule comprising: an outer containing body with a first side wall defining a longitudinal direction of said capsule and a first end wall arranged crosswise to said longitudinal direction, and a cover, said outer containing body and said cover being connected to each other at the end of said first side wall opposite to said first end wall, for forming a first inner chamber, said capsule further comprising a first inner duct extending in said longitudinal direction, towards the inside of said outer containing body from said first end wall, for fluidly connecting said first inner chamber with the outside of said capsule.

The invention further relates to a method for producing a capsule for preparing infusion beverages, comprising the steps of: providing a capsule with an outer containing body with a first side wall defining a longitudinal direction of said capsule and a first end wall arranged crosswise to said longitudinal direction, a cover and an inner containing body with a second side wall, said inner containing body being arranged inside said outer containing body for containing said infusion product.

### State of the art

Single or multiple dose capsules for preparing infusions are becoming more and more popular in the recent years.

Known capsules in the art contain an infusion product, such as coffee, brew, tea, juice or the like, in a closed internal chamber. For preparing the infusion beverage, the infusion product needs to be mixed with and infusion fluid, such as water, either hot or cold, by introducing the water into the closed inner chamber and extracting the infusion beverage through an extraction opening.

In order to obtain a good infusion product, it is necessary that the infusion fluid is evenly distributed through the infusion product, such that the infusion product is homogenously wetted in the infusion chamber. Also the longer the infusion fluid is in contact with the infusion product, the better the infusion beverage to be obtained. To this end, it is desirable to delay infusion fluid circulation before exiting the capsule already in the form of infusion beverage.

Document WO 2015124534 A1 discloses a type of capsule with the characteristics described in the previous paragraph. The capsule comprises an outer containing body with a first side wall, a first end wall and a central duct having an extraction opening forming a first inner chamber and an inner containing body arranged inside the outer containing body around the central duct forming a second inner chamber. A closing layer arranged at one end of the inner containing body separates the inner containing body from the outer containing body. Furthermore, at the end of the inner containing body opposite to the end on which the closing layer is arranged, the inner containing body comprises a plurality of inlet openings for fluidly connecting the first inner chamber with the second inner chamber. The infusion product is placed in the second inner chamber. The infusion fluid is injected into the first inner chamber, and then evenly introduced into the second inner chamber through the inlet openings. This causes the infusion fluid to homogeneously and slowly wet the infusion product to produce the infusion beverage in the direction from the inlet openings towards the extraction opening of the central duct. However, this capsule is difficult to produce and due to the placement of the inlet openings at the end of the inner containing body adjacent to the first end wall of the outer containing body, the volume of the inner containing body is reduced.

Document WO2008/078989 discloses a cup for the preparation of a liquid product, having a first chamber part for holding a preparation substance, an inlet opening provided with a covering layer with liquid-permeable perforations for receiving a liquid suitable for the preparation substance, an outlet opening for discharging the prepared beverage or dish, and a static mixer. The static mixer is in liquid communication with the outlet opening and is a multi-step mixer.

### Summary of the invention

It is an object of the invention to provide a capsule for preparing infusion beverages with a homogeneous infusion fluid distribution across the infusion product, and a long infusion fluid circulation time that can be easily produced. This purpose is achieved by a capsule for preparing infusion beverages of the type indicated at the beginning, characterised in that said capsule further comprises an inner containing body being a separate part from said outer containing body, said inner containing body comprising a second side wall and a second end wall, said second end wall having an extraction opening and being permeable such that said infusion beverage can circulate across said second end wall, said inner containing body being arranged upside down, inside said outer containing body, with said extraction opening fitted around said first inner duct and said second side wall bearing, with the end of said second side wall opposite to said second end wall, against said first end wall of said outer containing body for forming a second inner chamber fluidly connected with said first inner chamber, said capsule further comprising a closing layer for closing in a fluid-tight manner said second end wall at the side thereof facing the outside of said inner containing body, such that said infusion beverage after crossing said second end wall is directed towards said first inner duct.

Thanks to the second containing body being a separate part from said first containing body, it is easy to manufacture both parts in uncomplicated moulds.

Additionally, in this type of capsule, the injection fluid is normally injected into said first inner chamber and the infusion product is contained in the second inner chamber. Therefore, the infusion fluid is compelled to fill up the first inner chamber, and to be evenly distributed along the whole perimeter of the chamber until it reaches the bottom of the capsule. At this point where the inner containing body bears against the outer containing body, the injection fluid enters the second inner chamber for wetting the infusion product. The infusion fluid mixes with the infusion product to produce the infusion beverage inside the second inner chamber. Afterwards, thanks to the pressure inside the capsule, the infusion beverage crosses the second end wall. At this point, the closing layer guarantees that the infusion product is directed into the first inner duct and further towards the outside of the capsule. Therefore, this capsule configuration provides for a long and slow infusion path, which is favourable for a long mixing time into the second inner chamber and thus for a better quality of the infusion beverage.

Besides, it must be pointed out, that even if it is not essential for the problem that the invention seeks to solve, in order for the infusion beverage to come out of the first inner duct, the capsule needs to be opened. In order to provide a high quality product, these capsules are closed and more preferably sealed. This closing and/or sealing avoid fast oxidation of the infusion product by the contact with air. Therefore, prior to preparing the infusion beverage, the capsule needs to be opened.

A known system is to open the capsule mechanically with the help of the capsule holder of the machine with which the infusion is to be prepared, before starting the introduction of the infusion fluid into the internal chamber. Alternatively, the capsule can be introduced into the capsule holder in a closed stated, and be punctured to introduce the infusion fluid. Then, the capsule opens at the extraction side thereof due to the raise of the internal pressure in the internal chamber. In any case, both systems are feasible in the capsule of the invention.

The invention further includes a number of preferred features that are the object of the dependent claims and the utility of which will be highlighted hereinafter in the detailed description of an embodiment of the invention.

In an embodiment said cover is arranged for simultaneously closing said outer containing body and said inner containing body, such that said closing layer for closing said second end wall is said cover. Thanks to this solution, accidental obturations of the extraction opening are avoided. More particularly, the extraction opening cannot be closed by the closing layer due to the pressure exerted by the infusion fluid contained in the first inner chamber. In an optional embodiment, a circumferential protrusion protruding away from said second end wall is provided on the side of said second end wall facing outside said second inner container.

In a further embodiment, having the object of providing a simple configuration of the permeable wall, said second side wall and said second end wall are a single part and said second end wall has a plurality of outlet openings for allowing said infusion beverage to circulate across said second end wall. Preferably, in order to avoid small particles of infusion product to come out through the second end wall a further membrane layer can be arranged over the inner side of said second end wall. The membrane layer can be, for example, a cellulose layer of a perforated sheet like layer.

Also preferably, the outlet openings can have any cross section, such as circular, square, triangular or others. It is also especially preferred that the cross section of the outlet openings tappers in the infusion fluid flowing direction. Thanks to this, turbulences are created at side of the second end wall facing the cover. This turbulences help to obtain a more homogeneous mixture of infusion beverage.

Also in order to provide a solid assembly of the capsule, in a further embodiment said first containing body and said first inner duct are a single part, and said first inner duct extends across the whole of the first inner chamber underneath said cover.

Preferably, said first inner duct is arranged at the centre of the first end wall for providing a more homogeneous infusion fluid circulating path.

In another embodiment, said inner containing body comprises a second inner duct extending from said second end wall towards said inner containing body, and said second inner duct is fitted on said first inner duct. This configuration provides for good fluid tightness at the assembly interface between the inner lumen of the second inner duct and the outer surface of the first inner duct and also a good guiding of the second containing body on the first inner duct. The longer is the second inner duct, the better the guidance of the assembly. Therefore, preferably said second inner duct extends up to the edge of the inner containing body opposite to the second side wall.

Also preferably, in order to provide a reliable and controlled closing area for the closing layer, said inner containing body further comprises a circumferential projection projecting away from said second end wall at the side thereof facing the outside of said inner containing body. Especially preferred, and even if this is not essential for the invention, this circumferential projection is the side wall for simplifying the part construction.

In another embodiment, the edge of said second side wall bearing, with the end of said second side wall opposite to said second end wall, against said first end wall of said outer containing body, comprises a plurality of inlet openings for allowing said infusion fluid to enter said second inner chamber, said first end wall comprises a plurality of centering projections projecting away from said first end wall into the inside of said outer containing body for centering said second side wall relative to said outer containing body, and, when the capsule is mounted, said plurality of inlet openings is arranged relative to said plurality of centering projections such that at least partially, one opening of said plurality of inlet openings is not covered by said plurality of centering projections. This provides for a more controlled distribution of the infusion fluid around the perimeter of the second side wall.

Also for the sake of uniformity in the flowing pattern in the capsule, especially preferred the inlet openings and the centering ribs are regularly distributed.

In an especially preferred embodiment, said plurality of centering ribs are distributed to let a symmetrical plurality of inlet openings open for allowing the introduction of infusion fluid into the second inner chamber, for providing a homogeneous circulating path for the infusion fluid.

An object of another particularly preferred embodiment is to simplify the manufacture of the capsule. The outer and the inner containing bodies of the capsule can therefore be manufactured by forming if it is manufactured with a sheet of aluminum, or by thermoforming or injection molding if it is manufactured with plastic.

The cover is preferably a sheet of composite material that can be punctured, and made of materials, such as aluminum, plastic or combinations thereof. Alternatively, the cover could be a disk made of a material that can be punctured, such as plastic.

The outer and inner containing bodies are preferably manufactured in a substantially rigid material, such as aluminum, or injected or thermoformed plastic. They can also have different geometries, such as a rotational symmetric body, as a cylindrical, frustroconical, parallellepipedical or similar body shape. The inner and outer containing bodies can also have mirror symmetrical shapes, obtained from a mirror symmetrical cross section, such as regular polygons like a square, rectangle, pentagon, hexagon, heptagon, octagon orany number of sides, or other symmetrical cross sections as circles, ellipses and the like.

Preferably, the material of the outer containing body and the material of the cover are both barrier property materials to prevent the infusion product degradation and in order to avoid additional packaging measures. In the invention, a barrier property material refers to a material that does not let oxygen through the capsule outer walls or at least that lets it through at very low levels. In a particularly preferred manner, barrier materials according to the invention for the outer containing body and the cover are those having an oxygen transmission rate (OTR) less than or equal to 0.1 cm³/container/day. In the measurement, the oxygen transmission rate of the outer containing body refers to a closed capsule with the cover. As a result, the infusion product is better preserved and for a longer time inside the capsule.

Suitable materials for providing a barrier property are, for example, high density polyethylene (HDPE), aluminum, materials made up of a combination of different layers of polymers and metals, cellulose or others. These materials, such as aluminum or polyethylene (PE), prevent oxygen from coming into contact with the infusion product before the capsule is opened to start beverage preparation, and therefore to prevent oxidation thereof.

Removing oxygen from inside the inner chamber is also preferred before closing the capsule to complete packaging. The inner chamber containing the infusion product can be filled with a protective atmosphere, such as nitrogen. Then, the capsule is closed in an air-tight manner, preventing the infusion product from being exposed to an atmosphere that could degrade it.

Alternatively, if the material of the containing body and the cover are not a barrier material, the capsule could be packed in a wrapper having a barrier property, duly packaged in the absence of oxygen. For example, a sheet made by laminating a sheet of plastic and a sheet of aluminum could be used.

The invention also provides a method for producing a capsule of the type indicated above. To this end, the method further comprises the steps of: placing said cover over the end of said first side wall opposite to said first end wall, attaching said cover first to the end of said inner body adjacent to said cover, and afterwards attaching said cover to the end of said outer containing body.

The cover can be attached to the outer containing body in different ways. However, it is especially preferred that said cover is heat-sealed to said inner body and said outer body.

In a preferred embodiment of the method of the invention said capsule further comprises: a first inner duct extending from said first end wall in said longitudinal direction for fluidly connecting said first inner chamber with the outside of said capsule, and said inner containing body comprises a second side wall and a second end wall, said second end wall having an extraction opening and being permeable such that said infusion beverage can circulate across said second end wall, the method further comprising the steps of filling up said inner containing body with infusion product, arranging said outer containing body over said inner containing body, with said extraction opening fitted around said inner duct and said second side wall bearing, with the end of said second side wall opposite to said second end wall, against said first end wall of said outer containing body, and afterwards carrying out the steps placing the cover over the end of said first side wall opposite to said first end wall, attaching said cover first to the end of said inner body adjacent to said cover and afterwards attaching said cover to the end of said outer containing body.

The invention also refers to the problem of opening a capsule in a reliable and controlled manner. To this end, the invention provides a capsule for preparing infusion beverages by circulating an infusion fluid through an infusion product, said capsule comprising: an outer containing body with a first side wall defining a longitudinal direction of said capsule and a first end wall arranged crosswise to said longitudinal direction, and a cover, said outer containing body and said cover being connected to each other at the end of said first side wall opposite to said first end wall, for forming a first inner chamber, said capsule further comprising a first inner duct extending in said longitudinal direction, towards the inside of said outer containing body from said first end wall, for fluidly connecting said first inner chamber with the outside of said capsule, said first inner duct comprising an inner end and an outer end, characterised in that said first inner duct comprises a closing member for closing said first inner duct, said closing member being arranged separated from said outer end in the direction of the inside of said outer containing body and being separable from said first inner duct, said capsule having: a closed position, in which said closing member closes said first inner duct, and an open position, in which said closing member is separated from said first inner duct, and said capsule comprises a retention member provided at said outer end to reduce the cross section of said outer end for avoiding that in said open position, said closing member comes out of said first inner duct.

In the invention, the open position is meant to be a final position causing the opening of the capsule such that the infusion product can be extracted.

In a preferred embodiment seeking for a simple and economic solution for opening the capsule, said closing member and said first inner duct are a single part, and said closing member and said first inner duct are separated by a weakening line through which said closing member is separated from said inner duct under the effect of an external pressing force.

In a preferred embodiment seeking to facilitate the mechanical opening of the capsule and to guarantee that the closing member falls into the first inner duct, said closing member comprises a first protrusion protruding outside said first inner duct to the vicinity of said cover, and a second protrusion protruding into said first inner duct, said second protrusion being longer than the cross section of said first inner duct.

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Figure 1 shows a longitudinal section view of a first embodiment of a capsule according to the invention, with the capsule in a closed position and placed inside a machine for preparing infusions with the machine open.
Figure 2 shows a longitudinal section view of the capsule of Figure 1, with the capsule in an open position, with the machine closed.
Figure 3 shows an upper perspective view of the containing body of the capsule of Figure 1.
Figure 4 shows a detail view of the injection side of the capsule of Figure 1, in the closed position of the capsule.
Figure 5 shows a detail view of the injection side of the capsule of Figure 1, in the open position of the capsule.
Figure 6 shows diagrammatically the procedure for producing a capsule according to the invention.
Figure 7 shows a partial longitudinal section view of a second embodiment of a capsule according to the invention, with the capsule in the closed position.
Figure 8 shows a partial longitudinal section view of a second embodiment of a capsule according to the invention, with the capsule in the open position.
Figure 9 shows a longitudinal section view of a capsule according to another aspect of the invention, with the capsule in a closed position and placed inside a machine for preparing infusions with the machine open.
Figure 10 shows a longitudinal section view of the capsule of Figure 9, with the capsule in an open position, with the machine closed.

### Detailed description of embodiments of the invention

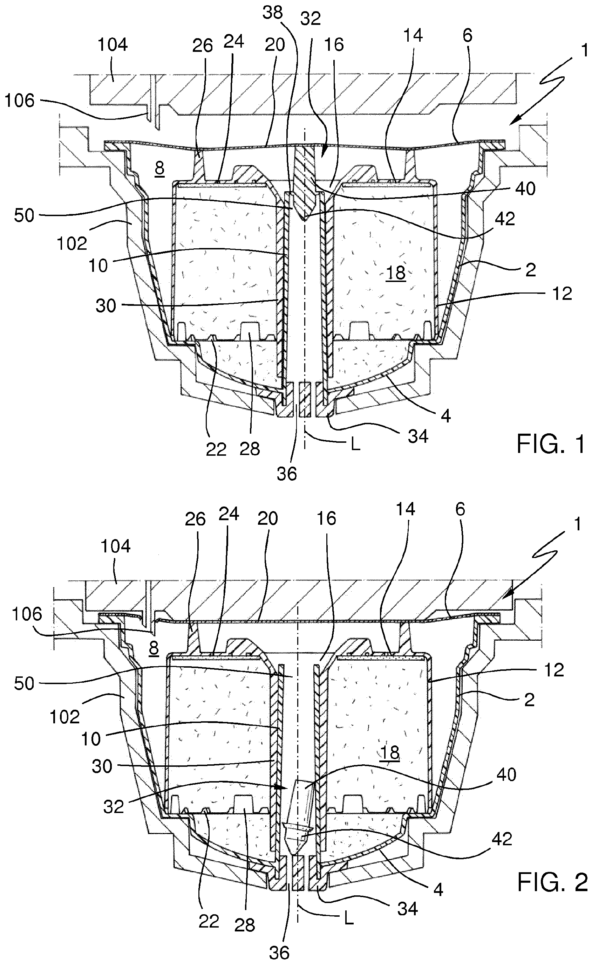

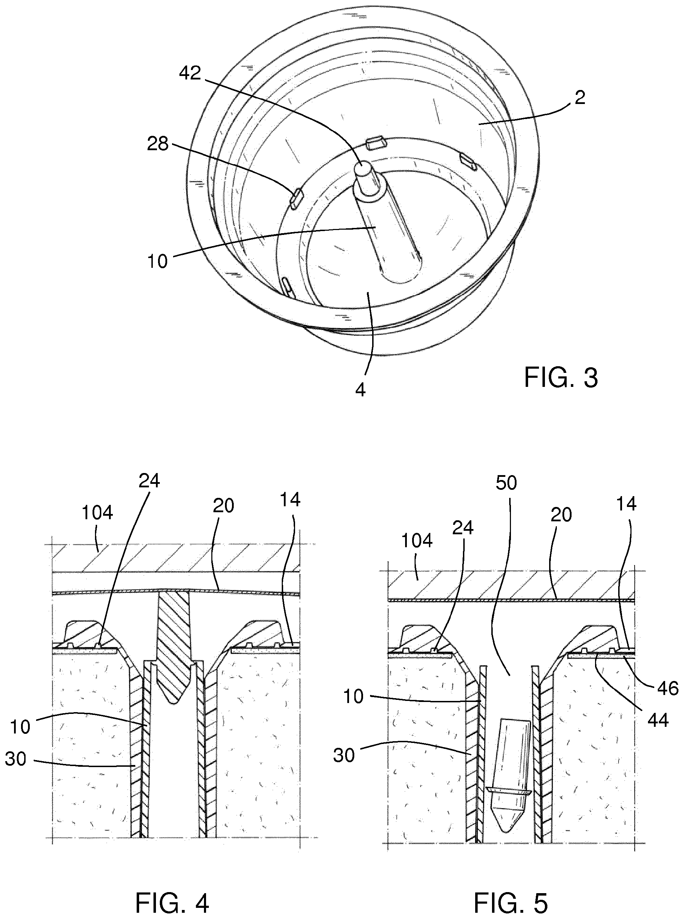

Figures 1 to 5 show a first embodiment of the capsule 1 for preparing infusion beverages by circulating an infusion fluid through an infusion product according to the invention.

The capsule 1 comprises an outer containing body with a first side wall 2, defining a longitudinal direction L of the capsule 1 and a first end wall 4. As it is apparent from the figures, the first end wall is arranged crosswise to the longitudinal direction L to close one end of the outer containing body.

The capsule 1 further comprises a cover 6. The cover 6 is made of a sheet-like material such as plastic, a metallic layer of a composite material of plastic and metal. Preferably, the cover 6 is made of a material having barrier properties.

The outer containing body and the cover 6 are connected to each other at the end of the first side wall 2 opposite to said first end wall 4. Thanks to this arrangement, a first inner chamber 8 is formed between both parts. Preferably, the cover 6 is heat sealed to the outer containing body.

The capsule 1 also comprises a first inner duct 10 extending in the longitudinal direction L, towards the inside of the outer containing body from said first end wall 4, for fluidly connecting the first inner chamber 8 with the outside of the capsule 1. In this preferred embodiment, the first inner duct 10 and outer containing body are a single part.

In order to solve the problem of providing a capsule for preparing infusion beverages with a homogeneous infusion fluid distribution across the infusion product and a long infusion fluid circulation time that can be easily produced the capsule 1 further comprises an inner containing body that is a separate part from the outer containing body.

The inner containing body has a second side wall 12 and a second end wall 14 to close the inner containing body at one end. The second end wall 14 has an extraction opening 16 and is permeable to liquid. Therefore, the infusion beverage, once it is produced, can circulate across the second end wall 14. In this particular embodiment, the second side wall 12 and said second end wall 14 are a single part made of plastic material. Additionally, in order to let the infusion fluid to cross the second end wall, the latter has a plurality of outlet openings 24 for allowing the infusion beverage to circulate across it. Optionally, in order to avoid small particles of infusion product to come out through the second end wall 14 a further membrane layer 46 is arranged over the inner side 44 of the second end wall 14. The membrane layer can be for example, a cellulose layer of a perforated sheet like layer.

The outlet openings are the second end wall 14 tapper towards the outside of the inner containing body.

As it is apparent from the figures, in order to guarantee a long circulation path of the infusion fluid, the inner containing body is arranged upside down, inside the outer containing body. Furthermore, the extraction opening 16 is fitted around said first inner duct 10 and the second side wall 12 bearing, with the end of said second side wall 12 opposite to said second end wall 14, against the first end wall 4 of the outer containing body for forming a second inner chamber 18 fluidly connected with the first inner chamber 8.

The capsule 1 further comprises a closing layer 20 for closing in a fluid-tight manner the second end wall 14 at the side thereof facing the outside of the inner containing body. Thanks to the arrangement, the infusion beverage, after crossing said second end wall 14, is directed towards said first inner duct 10. More particularly, in this embodiment, the inner containing body further comprises a circumferential projection 26 projecting away from the second end wall 14 at the side thereof facing the outside of said inner containing body. Additionally, the cover 6 simultaneously closes the outer containing body and said inner containing body. Therefore, as it is apparent from the figures, the closing layer 20 for closing the second end wall 14 at said circumferential projection 26 is the cover 6. However, the circumferential projection 26 is not essential for attaching the closing layer 20 to the outer containing body.

This embodiment also shows that the first containing body and the first inner duct 10 are a single part. Furthermore, the first inner duct 10 extends across the whole of the first inner chamber 8 underneath the cover 6. Also preferably, the first containing body and the first inner duct are made of plastic material, preferably with barrier properties, by injection moulding.

The first inner duct 10 comprises a closing member 32 for closing the first inner duct 10. The first inner duct 10 has an outer end 36 protruding out of the outer face of the first end wall 4 in order for the duct to form the delivery conduit of the beverage production machine. Therefore, the closing member 32 is arranged separated from the outer end 36 in the direction of the inside of the outer containing body. This closing member 32 is separable from the first inner duct 10, via a weakening line 38 through which the closing member is separated from the first inner duct under the effect of an external pressing force, such as the force exerted by the movable part 104 against the fixed part 102 of the capsule holder of the infusion beverage producing machine. Therefore, the capsule 1 has two different positions, which are: a closed position, in which said closing member 32 closes the first inner duct 10, and an open position, in which said closing member 32 is separated from said first inner duct.

Moreover, in order to prevent the closing member from falling into the container receiving the infusion beverage, the capsule 1 comprises a retention member 34 provided at the outer end 36 to reduce the cross section of said outer end 36 for avoiding that in the open position, the closing member 32 comes out of said first inner duct 10.

In order to guarantee a good fluid tightness at the assembly interface between the inner lumen of the second inner duct and the outer surface of the first inner duct and also a good guiding of the second containing body on the first inner duct, the inner containing body comprises a second inner duct 30. This second inner duct 30 extends from the second end wall 14 towards the inner containing body, this second inner duct 30 being snuggly fitted on said first inner duct 10.

Finally, in this embodiment, the edge of the second side wall 12 bearing, with the end of the second side wall 12 opposite to the second end wall 14, against the first end wall 4 of the outer containing body, comprises a plurality of inlet openings 22. These inlet openings allow the infusion fluid to enter the second inner chamber 18.

Furthermore, the first end wall 4 comprises a plurality of centering projections 28 projecting away from the first end wall 4 into the inside of the outer containing body. These centering projections 28 allow the centering of the second side wall 12 relative to said outer containing body, but also provide an additional stiffness to this wall.

When the capsule is mounted, the plurality of inlet openings 22 is arranged relative to the plurality of centering projections 28 such that at least partially, many of the openings of the plurality of inlet openings 22 is not covered by the plurality of centering projections 28.

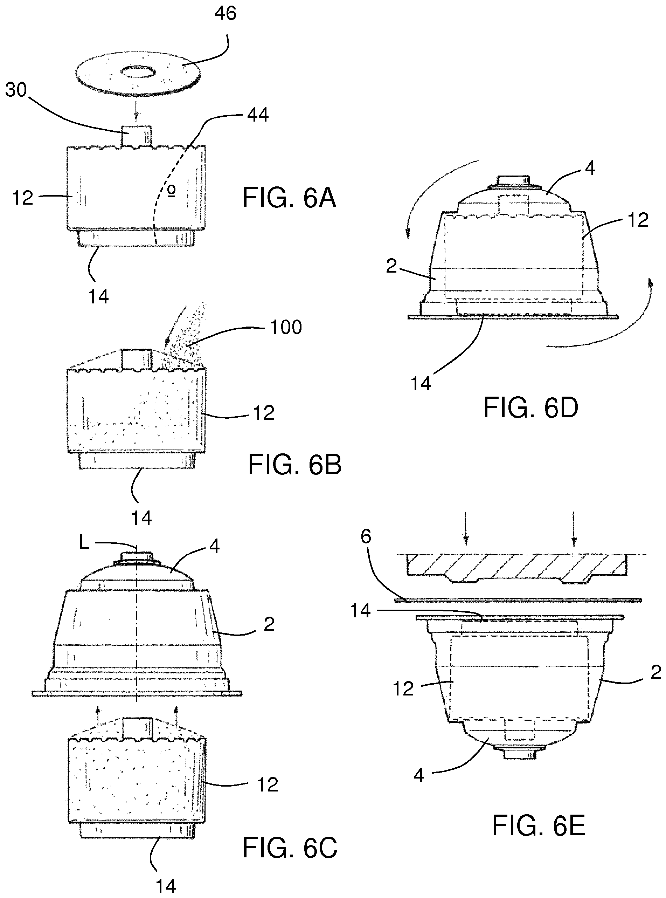

Figures 6A to 6E show a method for producing a capsule for preparing infusion beverages according to the invention.

According to the method of the invention, in a first step it is provided a capsule 1 with an outer containing body having a first side wall 2 defining a longitudinal direction L of the capsule 1 and a first end wall 4 arranged crosswise to the longitudinal direction L a cover 6. There is also provided an inner containing body with a second side wall 12.

The inner containing body inner containing body is in this case a separate part from the outer containing body. However, in the most general concept of the method of the invention this is not essential.

In this case, the inner containing body comprises a second side wall 12 and a second end wall 14.

Optionally, a membrane layer 46 is arranged over the inner side 44 of the second end wall 14. Afterwards, as it is apparent from the figures, the inner containing body is first filled up with infusion product 100.

In the most general concept of the method of the invention, the inner containing body and the outer containing body can be a single part. However, in this case, both parts are separate parts.

In an optional embodiment of the method of the invention, the capsule 1 further comprises a first inner duct 10, as the one shown in previous figures 1 to 5, extending from the first end wall 4 in the longitudinal direction L for fluidly connecting the first inner chamber 8 with the outside of said capsule 1.

Further, the inner containing body comprises a second side wall 12 and a second end wall 14. The second end wall 14 has an extraction opening 16 and is permeable such that said infusion beverage can circulate across the second end wall 14.

As it is apparent from the figures in a first step the inner containing body is filled up with infusion product 100. More particularly, the inner containing body is filled up until it reaches the end of the second inner duct 30 of the inner containing body.

Then, after the inner containing body is filled up with infusion product, such as coffee or the like, the outer containing body is placed over the inner containing body, with the extraction opening 16 fitted around the inner duct 10 and the second side wall 12 bearing, with the end of said second side wall 12 opposite to the second end wall 14, against the first end wall 4 of the outer containing body.

The cover 6 is placed over the end of said first side wall 2 opposite to said first end wall 4.

Finally, in order to avoid that the air retained inside the first containing chamber hinders the closing of the second inner chamber 18, in the method of the invention, the cover 6 is attached first to the end of said inner body adjacent to said cover 6 and afterwards the same cover 6 is attached to the end of said outer containing body. This provides an effective and easy sealing of the first and second inner chambers.

Below, other embodiments of the capsule according to the invention are shown. These embodiments share most of the features described in the preceding paragraphs. Accordingly, only the elements differentiating the embodiments from one another will be described hereinafter, whereas reference to the description of the first embodiment is made with respect to the elements they have in common.

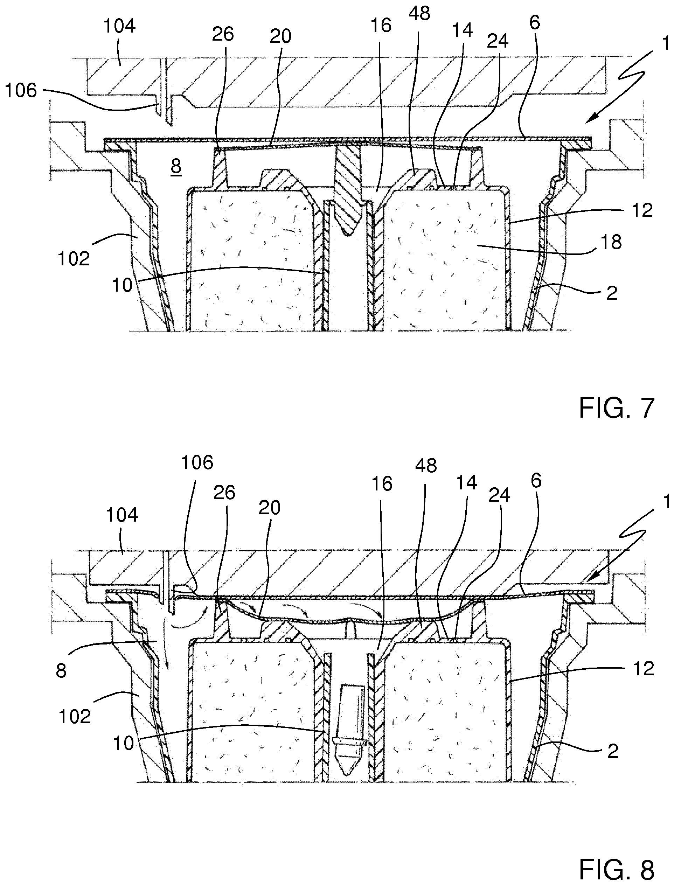

The embodiment of Figures 7 and 8 differs from the one of the previous Figures 1 to 5 in that, the closing layer 20 for closing in a fluid-tight manner the second end wall 14 at the side thereof facing the outside of said inner containing body is separated from said cover 6. However, after crossing the second end wall 14 the infusion beverage is also directed towards said first inner duct 10.

In this case, in order to avoid that the closing layer 20 is deformed by the fluid pressure exerted by the infusion fluid in the first inner chamber 8 and that the extraction opening 16 at the second end wall 14 is closed, the plurality of spacing ribs 48 provided at the side of the second end wall 14 facing away the inside of the second inner chamber 18 act as a stopping member for the closing lay 20, thus leaving the extraction opening free.

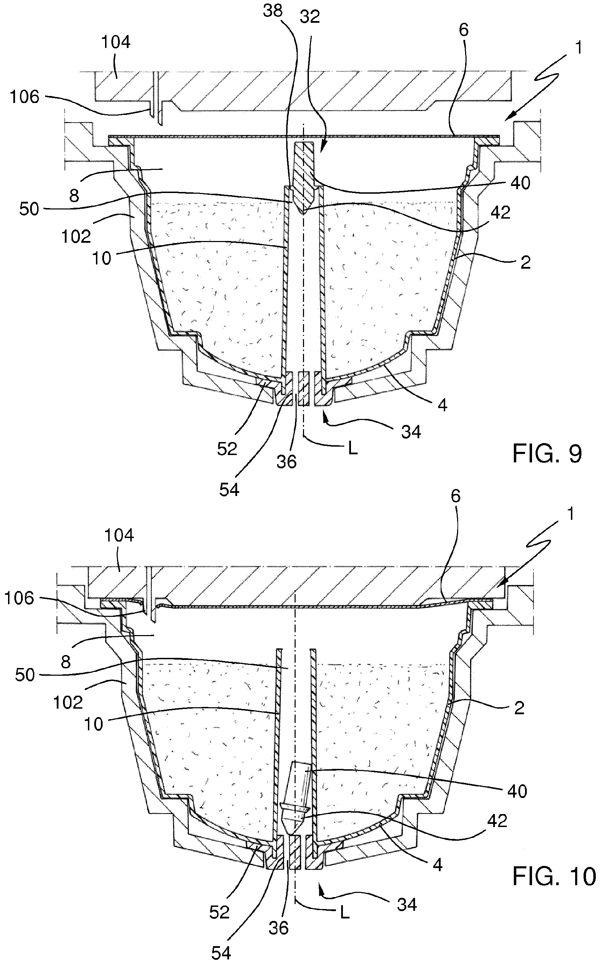

Finally, the invention also discloses a capsule 1 for preparing infusion beverages by circulating an infusion fluid through an infusion product, with an innovative opening system. This capsule is based on the embodiment of Figures 1 to 5 and Figures 9 and 10. As it is apparent from Figures 9 and 10, even if the opening system is also applicable to the embodiments already with a second inner containing body described herein, this opening system is not limited to these embodiments. Therefore, the use of this second inner containing body is not compulsory. Indeed the capsule of Figures 9 and 10 is especially adapted for the preparation of infusion beverages from soluble infusion products.

The capsule 1 comprises an outer containing body with a first side wall 2 defining a longitudinal direction L of the capsule 1 and a first end wall 4 arranged crosswise to the longitudinal direction L, and a cover 6.

The outer containing body and the cover 6 are, as in the previous embodiments, connected to each other at the flange-like rim of the end of the first side wall 2 opposite to said first end wall 4, for forming a first inner chamber 8.

The capsule 1 further comprises a first inner duct 10 extending in the longitudinal direction L, towards the inside of the outer containing body from the first end wall 4, for fluidly connecting the first inner chamber 8 with the outside of the capsule 1.

As it is apparent, from Figures 9 and 10, the first inner duct 10 comprises an inner end 50 and an outer end 36. According to this solution the first inner duct 10 comprises a closing member 32 for closing the first inner duct 10. To this end, the closing member 32 is arranged separated from the outer end 36 in the direction of the inside of the outer containing body. Although in the embodiments shown in the Figures, the first inner duct 10 extends up to the lower surface of the cover 6, this first inner duct 10 can have different heights. Especially in the case of the embodiment of Figures 1 to 5, it is not compulsory to have such a long duct, because the second inner duct 30 can replace the outlet function of the first inner duct 10 when it extends up to the cover 6.

This closing member 36 is separable from said the first inner duct 10.

The capsule 1 has a closed position, in which said closing member 32 closes the first inner duct 10, and an open position, in which the closing member 32 is separated from the first inner duct 10.

In this preferred embodiment, the closing member 32 and the first inner duct 10 are a single part. The closing member 32 is separable from the first inner duct 10 along a controlled breaking line 18 and movable within said inner duct 10 to free the inner end 26, said capsule 1 further having a retention member 34 for reducing the cross section of said outer end 36 and for avoiding said closing member 32 to come out of said inner duct 10 when the closing member 32 is separated from the inner duct 10 under the effect of an external pressing force.

In particular, the cross section reduction is achieved by arranging a cover 52 on the outer end 36 comprising at least on outlet openings 54. In the figures, only the two outlet openings 54 are shown coincident with the cutting plane. However, the cover 60 comprises six outlet openings 54. These outlet openings 54 have a circular cross section smaller than 2 mm². Other embodiments can have two or three or more outlet openings 54.

This external pressing force can be provided by the own infusion beverage machine. To this end, the movable part 104 and the fixed part of the capsule holder compress the closing member 32 until it separates from the first inner duct 10. Alternatively, also the user could press on the closing member 36 before introducing the capsule 1 into the machine.

Also, in order to have a reliable and controlled opening of the closing means 14 it is provided that the closing means 14 are formed by a first protrusion 40 protruding outside the first inner duct 10 and extending up to the vicinity of the cover 6. On the other side, the closing means 14 has a second protrusion 42 protruding into the first inner duct 10. Thanks to the fact that the second protrusion 42 is longer than the smallest cross section of the first inner duct 10 at the inner end 50 it is guaranteed that when the closing means 14 are separated from the inner duct 10, they fall into the inner duct 10.

Also from the tip of the second protrusion 42 tapers in the direction of said outer end 36 for avoiding accidental obstructions of the outlet openings 54. In particular in this case, the second protrusion 42 is frustroconically shaped, but other tapering shapes such a tethraedron, pyramid or others are also possible.

## Claims

1. A capsule (1) for preparing infusion beverages by circulating an infusion fluid through an infusion product, said capsule comprising:
[a] an outer containing body with a first side wall (2) defining a longitudinal direction (L) of said capsule (1) and a first end wall (4) arranged crosswise to said longitudinal direction (L), and
[b] a cover (6),
[c] said outer containing body and said cover (6) being connected to each other at the end of said first side wall (2) opposite to said first end wall (4), for forming a first inner chamber (8),
[d] said capsule (1) further comprising a first inner duct (10) extending in said longitudinal direction (L) towards the inside of said outer containing body from said first end wall (4), for fluidly connecting said first inner chamber (8) with the outside of said capsule (1), and
[e] an inner containing body comprising a second side wall (12),
**characterised in that**
[f] said inner containing body is a separate part from said outer containing body, said inner containing body comprising a second end wall (14), said second end wall (14) having an extraction opening (16) and being permeable such that said infusion beverage can circulate across said second end wall (14),
[g] said inner containing body being arranged upside down, inside said outer containing body, with said extraction opening (16) fitted around said first inner duct (10) and said second side wall (12) bearing, with the end of said second side wall (12) opposite to said second end wall (14), against said first end wall (4) of said outer containing body for forming a second inner chamber (18) fluidly connected with said first inner chamber (8),
[h] said capsule (1) further comprising a closing layer (20) for closing in a fluid-tight manner said second end wall (14) at the side thereof facing the outside of said inner containing body, such that said infusion beverage after crossing said second end wall (14) is directed towards said first inner duct (10).

2. The capsule (1) according to claim 1, **characterised in that** said cover (6) is arranged for simultaneously closing said outer containing body and said inner containing body, such that said closing layer (20) for closing said second end wall (14) is said cover (6).

3. The capsule (1) according to claim 1 or 2, **characterised in that** said second side wall (12) and said second end wall (14) are a single part and **in that** said second end wall (14) has a plurality of outlet openings (24) for allowing said infusion beverage to circulate across said second end wall (14).

4. The capsule (1) according to any of claims 1 to 3, **characterised in that** said first containing body and said first inner duct (10) are a single part, and **in that** said first inner duct (10) extends across the whole of the first inner chamber (8) underneath and adjacent to said cover (6).

5. The capsule (1) according to claim 4, **characterised in that** said inner containing body comprises a second inner duct (30) extending from said second end wall (14) towards said inner containing body, and **in that** said second inner duct (30) is fitted on said first inner duct (10).

6. The capsule (1) according to any of claims 1 to 5, **characterised in that** said inner containing body further comprises a circumferential projection (26) projecting away from said second end wall (14) at the side thereof facing the outside of said inner containing body.

7. The capsule (1) according to any of claims 1 to 6, **characterised in that** the edge of said second side wall (12) bearing, with the end of said second side wall (12) opposite to said second end wall (14), against said first end wall (4) of said outer containing body, comprises a plurality of inlet openings (22) for allowing said infusion fluid to enter said second inner chamber (18), **in that** said first end wall (4) comprises a plurality of centering projections (28) projecting away from said first end wall (4) into the inside of said outer containing body for centering said second side wall (12) relative to said outer containing body, and **in that**, when the capsule is mounted, said plurality of inlet openings (22) is arranged relative to said plurality of centering projections (28) such that at least partially, one opening of said plurality of inlet openings (22) is not covered by said plurality of centering projections (28).

8. A method for producing a capsule for preparing infusion beverages, comprising the steps of:
[a] providing a capsule with
[i] an outer containing body with a first side wall (2) defining a longitudinal direction (L) of said capsule (1) and a first end wall (4) arranged crosswise to said longitudinal direction (L),
[ii] a cover (6),
[iii] said capsule (1) further comprising a first inner duct (10) extending in said longitudinal direction (L) towards the inside of said outer containing body from said first end wall (4), for fluidly connecting said first inner chamber (8) with the outside of said capsule (1), and
[iii] an inner containing body with a second side wall (12), said inner containing body being arranged inside said outer containing body for containing said infusion product and
**characterised in that**
[b] inner containing body is provided with a second end wall (14), said second end wall (14) having an extraction opening (16) and being permeable such that said infusion beverage can circulate across said second end wall (14),
the method further comprising the steps of:
[c] filling up said inner containing body with infusion product (100),
[d] arranging said outer containing body over said inner containing body, with said extraction opening (16) fitted around said inner duct and said second side wall (12) bearing, with the end of said second side wall (12) opposite to said second end wall (14), against said first end wall (4) of said outer containing body, and afterwards
[e] placing said cover (6) over the end of said first side wall (2) opposite to said first end wall (4),
[f] attaching said cover (6) first to the end of said inner body adjacent to said cover and
[g] afterwards attaching said cover (6) to the end of said outer containing body.

## Patentansprüche

1. Kapsel (1) zum Zubereiten von Aufgussgetränken durch Strömen einer Aufgussflüssigkeit durch ein Aufgussprodukt, wobei die Kapsel umfasst:
[a] einen äußeren Aufnahmekörper mit einer ersten Seitenwand (2), der eine Längsrichtung (L) der Kapsel (1) definiert und eine erste Stirnwand (4), die quer zur Längsrichtung (L) angeordnet ist, und
[b] einen Deckel (6),
[c] wobei der äußere Aufnahmekörper und der Deckel (6) am Ende der ersten Seitenwand (2) gegenüber der ersten Stirnwand (4) miteinander verbunden sind, um eine erste Innenkammer (8) auszubilden,
[d] wobei die Kapsel (1) ferner einen ersten Innenkanal (10) umfasst, der sich von der ersten Stirnwand (4) in der Längsrichtung (L) ins Innere des äußeren Aufnahmekörpers erstreckt, um die erste Innenkammer (8) mit dem Äußeren der Kapsel (1) fluidtechnische zu verbinden, und
[e] einen inneren Aufnahmekörper, umfassend eine zweite Seitenwand (12),
**dadurch gekennzeichnet, dass**
[f] der innere Aufnahmekörper ein vom äußeren Aufnahmekörper gesondertes Teil ist, wobei der innere Aufnahmekörper eine zweite Stirnwand (14) umfasst, und wobei die zweite Stirnwand (14) eine Entnahmeöffnung (16) umfasst und durchlässig ist, damit die Aufgussflüssigkeit durch die zweite Stirnwand (14) strömen kann,
[g] der innere Aufnahmekörper kopfüber innerhalb des äußeren Aufnahmekörpers angeordnet ist, wobei die Entnahmeöffnung (16) um den ersten Innenkanal (10) und die zweite Seitenwand (12) herum eingespasst ist, und wobei das der zweiten Stirnwand (14) gegenüberliegenden Ende der zweiten Seitenwand (12) an der ersten Stirnwand (4) des äußeren Aufnahmekörpers stösst, um eine zweite Innenkammer (18), die mit der ersten Innenkammer (8) fluidtechnisch verbunden ist, auszubilden,
[h] die Kapsel (1) ferner eine Verschlussschicht (20) zum fluiddichten Verschließen der zweiten Stirnwand (14) an der der Außenseite des inneren Aufnahmekörpers zugewandten Seite umfasst, so dass die Aufgussflüssigkeit nach Durchqueren der zweiten Stirnwand (14) auf den ersten Innenkanal (10) gerichtet ist.

2. Die Kapsel (1) nach Anspruch 1, **dadurch gekennzeichnet, dass** der Deckel (6) zum gleichzeitigen Verschließen des äußeren Aufnahmekörpers und des inneren Aufnahmekörpers angeordnet ist, so dass die Verschlussschicht (20) zum Verschließen der zweiten Stirnwand (14) der Deckel (6) ist.

3. Die Kapsel (1) nach Anspruch 1 oder 2, **dadurch gekennzeichnet, dass** die zweite Seitenwand (12) und die zweite Stirnwand (14) einteilig sind, und dass die zweite Stirnwand (14) eine Vielzahl an Austrittsöffnungen (24) umfasst, die ein Strömen der Ausgussflüssigkeit durch die zweite Stirnwand (14) ermöglichen.

4. Die Kapsel (1) nach einem der Ansprüche 1 bis 3, **dadurch gekennzeichnet, dass** der erste Aufnahmekörper und der erste Innenkanal (10) einteilig sind, und dass sich der erste Innenkanal (10) über die gesamte erste Innenkammer (8) unter und am Deckel (6) angrenzend erstreckt.

5. Die Kapsel (1) nach Anspruch 4, **dadurch gekennzeichnet, dass** der innere Aufnahmekörper einen zweiten Innenkanal (30) umfasst, der sich von der zweiten Stirnwand (14) in den inneren Aufnahmekörper erstreckt, und dass der zweite Innenkanal (30) an den ersten Innenkanal (10) eingepasst ist.

6. Die Kapsel (1) nach einem der Ansprüche 1 bis 5, **dadurch gekennzeichnet, dass** der innere Aufnahmekörper ferner einen umlaufenden Vorsprung (26) umfasst, der von der zweiten Stirnwand (14) auf der der Außenseite des inneren Aufnahmekörpers zugewandten Seite absteht.

7. Die Kapsel (1) nach einem der Ansprüche 1 bis 6, **dadurch gekennzeichnet, dass** der Rand der zweiten Seitenwand (12), wobei das der zweiten Stirnwand (14) gegenüberliegende Ende der zweiten Seitenwand (12) an der ersten Stirnwand (4) des äußeren Aufnahmekörpers angeordnet ist, eine Vielzahl an Eintrittsöffnungen (22) umfasst, die ein Eindringen der Aufgussflüssigkeit in die zweite Innenkammer (18) ermöglicht, und dass die erste Stirnwand (4) eine Vielzahl an Zentriervorsprüngen (28) umfasst, die von der ersten Stirnwand (4) in das Innere des äußeren Aufnahmekörpers zum Zentrieren der zweiten Seitenwand (12) relativ zum äußeren Aufnahmekörper absteht, und dass, wenn die Kapsel montiert wird, die Vielzahl an Eintrittsöffnungen (22) relativ zur Vielzahl an Zentriervorsprüngen (28) angeordnet ist, sodass zumindest teilweise eine Öffnung der Vielzahl an Eintrittsöffnungen (22) nicht durch die Vielzahl an Zentriervorsprüngen (28) abgedeckt ist.

8. Ein Verfahren zum Herstellen einer Kapsel zum Zubereiten eines Aufgussgetränks, umfassend die folgenden Schritte:
[a] Zurverfügungstellen einer Kapsel mit
[i] einem äußeren Aufnahmekörper, mit einer ersten Seitenwand (2), der eine Längsrichtung (L) der Kapsel (1) definiert, und eine erste Stirnwand (4), die quer zur Längsrichtung (L) angeordnet ist, und
[ii] einem Deckel (6),
[iii] wobei die Kapsel (1) ferner einen ersten Innenkanal (10) umfasst, der sich von der ersten Stirnwand (4) in der Längsrichtung (L) ins Innere des äußeren Aufnahmekörpers erstreckt, um die erste Innenkammer (8) mit dem Äußeren der Kapsel (1) fluidtechnisch zu verbinden, und
[iv] einem inneren Aufnahmekörper, umfassend eine zweite Seitenwand (12), wobei der innere Aufnahmekörper innerhalb des äußeren Aufnahmekörpers zum Enthalten des Aufgussprodukts angeordnet ist, und
**dadurch gekennzeichnet, dass**
[b] der innere Aufnahmekörper eine zweite Stirnwand (14) umfasst, wobei die zweite Stirnwand (14) eine Entnahmeöffnung (16) umfasst und durchlässig ist, damit die Aufgussflüssigkeit durch die zweite Stirnwand (14) strömen kann,
und das Verfahren ferner die folgenden Schritte umfasst:
[c] Auffüllen des inneren Aufnahmekörpers mit dem Aufgussprodukt (100),
[d] Anordnen des äußeren Aufnahmekörpers über den inneren Aufnahmekörper, wobei die Entnahmeöffnung (16) um den Innenkanal und die zweite Seitenwand (12) eingepasst ist, wobei das der zweiten Stirnwand (14) gegenüberliegenden Ende der zweiten Seitenwand (12) an der ersten Stirnwand (4) des äußeren Aufnahmekörpers stösst, und nachfolgend
[e] Platzieren des Deckels (6) über dem Ende der ersten Seitenwand (2) gegenüber der ersten Stirnwand (4),
[f] Anbringen des Deckels (6) zuerst an das dem Deckel angrenzenden Ende des inneren Aufnahmekörpers und
[g] nachfolgendes Anbringen des Deckels (6) an das Ende des äußeren Aufnahmekörpers.

## Revendications

1. Capsule (1) pour préparer des boissons d'infusion en faisant circuler un fluide d'infusion à travers un produit d'infusion, ladite capsule comprenant :
[a] un corps contenant extérieur présentant une première paroi latérale (2) définissant une direction longitudinale (L) de ladite capsule (1) et une première paroi d'extrémité (4) agencée transversalement à ladite direction longitudinale (L), et
[b] un couvercle (6),
[c] ledit corps contenant extérieur et ledit couvercle (6) étant reliés l'un à l'autre au niveau de l'extrémité de ladite première paroi latérale (2) à l'opposé de ladite première paroi d'extrémité (4), pour former une première chambre intérieure (8),
[d] ladite capsule (1) comprenant en outre un premier conduit intérieur (10) s'étendant dans ladite direction longitudinale (L) vers l'intérieur dudit corps contenant extérieur depuis ladite première paroi d'extrémité (4), pour relier fluidiquement ladite première chambre intérieure (8) avec l'extérieur de ladite capsule (1), et
[e] un corps contenant intérieur comprenant une seconde paroi latérale (12), **caractérisée en ce que**
[f] ledit corps contenant intérieur est une partie séparée dudit corps contenant extérieur, ledit corps contenant intérieur comprenant une seconde paroi d'extrémité (14), ladite seconde paroi d'extrémité (14) présentant une ouverture d'extraction (16) et étant perméable de telle sorte que ladite boisson d'infusion peut circuler à travers ladite seconde paroi d'extrémité (14),
[g] ledit corps contenant intérieur étant agencé à l'envers, à l'intérieur dudit corps contenant extérieur, ladite ouverture d'extraction (16) étant ajustée autour dudit premier conduit intérieur (10) et ladite seconde paroi latérale (12) prenant appui, par l'extrémité de ladite seconde paroi latérale (12) à l'opposé de ladite seconde paroi d'extrémité (14), contre ladite première paroi d'extrémité (4) dudit corps contenant extérieur pour former une seconde chambre intérieure (18) reliée fluidiquement à ladite première chambre intérieure (8),
[h] ladite capsule (1) comprenant en outre une couche de fermeture (20) pour fermer de manière étanche au fluide ladite seconde paroi d'extrémité (14) sur le côté de celle-ci faisant face à l'extérieur dudit corps contenant intérieur, de sorte que ladite boisson d'infusion, après avoir traversé ladite seconde paroi d'extrémité (14), est dirigée vers ledit premier conduit intérieur (10).

2. Capsule (1) selon la revendication 1, **caractérisée en ce que** ledit couvercle (6) est agencé pour fermer simultanément ledit corps contenant extérieur et ledit corps contenant intérieur, de sorte que ladite couche de fermeture (20) destinée à fermer ladite seconde paroi d'extrémité (14) est ledit couvercle (6).

3. Capsule (1) selon la revendication 1 ou 2, **caractérisée en ce que** ladite seconde paroi latérale (12) et ladite seconde paroi d'extrémité (14) sont une seule pièce, et **en ce que** ladite seconde paroi d'extrémité (14) présente une pluralité d'ouvertures de sortie (24) pour permettre à ladite boisson d'infusion de circuler à travers ladite seconde paroi d'extrémité (14).

4. Capsule (1) selon l'une quelconque des revendications 1 à 3, **caractérisée en ce que** ledit premier corps contenant et ledit premier conduit intérieur (10) sont une seule pièce, et **en ce que** ledit premier conduit intérieur (10) s'étend sur l'ensemble de la première chambre intérieure (8) en dessous de et adjacent audit couvercle (6).

5. Capsule (1) selon la revendication 4, **caractérisée en ce que** ledit corps contenant intérieur comprend un second conduit intérieur (30) s'étendant depuis ladite seconde paroi d'extrémité (14) vers ledit corps contenant intérieur, et **en ce que** ledit second conduit intérieur (30) est ajusté sur ledit premier conduit intérieur (10).

6. Capsule (1) selon l'une quelconque des revendications 1 à 5, **caractérisée en ce que** ledit corps contenant intérieur comprend en outre une saillie circonférentielle (26) faisant saillie en s'éloignant de ladite seconde paroi d'extrémité (14) sur le côté de celle-ci faisant face à l'extérieur dudit corps contenant intérieur.

7. Capsule (1) selon l'une quelconque des revendications 1 à 6, **caractérisée en ce que** le bord de ladite seconde paroi latérale (12), prenant appui, par l'extrémité de ladite seconde paroi latérale (12) à l'opposé de ladite seconde paroi d'extrémité (14), contre ladite première paroi d'extrémité (4) dudit corps contenant extérieur, comprend une pluralité d'ouvertures d'entrée (22) pour permettre audit fluide d'infusion d'entrer dans ladite seconde chambre intérieure (18), **en ce que** ladite première paroi d'extrémité (4) comprend une pluralité de saillies de centrage (28) en s'éloignant de ladite première paroi d'extrémité (4) jusque dans l'intérieur dudit corps contenant extérieur pour centrer ladite seconde paroi latérale (12) par rapport audit corps contenant extérieur, et **en ce que**, lorsque la capsule est montée, ladite pluralité d'ouvertures d'entrée (22) est agencée par rapport à ladite pluralité de saillies de centrage (28) de sorte qu'au moins partiellement, une ouverture de ladite pluralité d'ouvertures d'entrée (22) n'est pas recouverte par ladite pluralité de saillies de centrage (28).

8. Procédé de production d'une capsule pour préparer des boissons d'infusion, comprenant les étapes consistant à :
[a] fournir une capsule comprenant
[i] un corps contenant extérieur présentant une première paroi latérale (2) définissant une direction longitudinale (L) de ladite capsule (1) et une première paroi d'extrémité (4) agencée transversalement à ladite direction longitudinale (L),
[ii] un couvercle (6),
[iii] ladite capsule (1) comprenant en outre un premier conduit intérieur (10) s'étendant dans ladite direction longitudinale (L) vers l'intérieur dudit corps contenant extérieur depuis ladite première paroi d'extrémité (4), pour relier fluidiquement ladite première chambre intérieure (8) avec l'extérieur de ladite capsule (1), et
[iv] un corps contenant intérieur présentant une seconde paroi latérale (12), ledit corps contenant intérieur étant agencé à l'intérieur dudit corps contenant extérieur pour contenir ledit produit d'infusion et
**caractérisé en ce que**
[b] ledit corps contenant intérieur est pourvu d'une seconde paroi d'extrémité (14), ladite seconde paroi d'extrémité (14) présentant une ouverture d'extraction (16) et étant perméable de telle sorte que ladite boisson d'infusion peut circuler à travers ladite seconde paroi d'extrémité (14),
le procédé comprenant en outre les étapes :
[c] de remplissage dudit corps contenant intérieur avec du produit d'infusion (100),
[d] d'agencement dudit corps contenant extérieur par-dessus ledit corps contenant intérieur, ladite ouverture d'extraction (16) étant ajustée autour dudit conduit intérieur et ladite seconde paroi latérale (12) prenant appui, par l'extrémité de ladite seconde paroi latérale (12) à l'opposé de ladite seconde paroi d'extrémité (14), contre ladite première paroi d'extrémité (4) dudit corps contenant extérieur, puis
[e] de placement dudit couvercle (6) au-dessus de l'extrémité de ladite première paroi latérale (2) à l'opposé de ladite première paroi d'extrémité (4),
[f] de fixation dudit couvercle (6) en premier lieu à l'extrémité dudit corps intérieur adjacent audit couvercle, et
[g] ensuite de fixation dudit couvercle (6) à l'extrémité dudit corps contenant extérieur.
